# EUROPEAN PATENT APPLICATION

(11) **EP 1 202 169 A1**
(43) Date of publication of application: **02.05.2002**
(21) Application number: 01000568.4
(22) Date of filing: 25.10.2001
(51) Int. Cl.: G06F 9/445, G06F 11/36

(54) **Object file server**

(30) Priority: 25.10.2000 US 242750 P; 12.12.2000 US 254576 P
(71) Applicant: Texas Instruments Incorporated, Dallas, Texas 75251 (US)
(72) Inventor: Knoll, Stephen J., 15146, Monroeville (US)
(74) Representative: Holt, Michael

(57) **Abstract**

An object file server provides when used with a debugger,for example, a universal debugger capable of debugging files (103) with different file formats . The object file server includes a core (107) and multiple target specific readers (109₁-109ₙ) which are sequentially coupled to the files and a target specific readers read the files and the information from the files is stored in the core (107). The object file server includes a client debugger interface (107b) for reading the information from the core (107) to the debugger (105a) in a single format.

## Description

### TECHNICAL FIELD OF THE INVENTION

This invention relates to an object file server and more particularly to an object file server that can read from, or write to, multiple formats.

### BACKGROUND OF THE INVENTION

Software development for applications on microcontrollers, microprocessors and/or digital signal processors may involve a host debugger and/or linker. A compiler translates a source code into an assembly language code. An assembler translates the assembly language source code files into machine language object files. A linker combines the object files into a single executable program. The linker accepts object files created by the assembler as input. The linker also accepts active or library member and output modules or programs created previously. The objective of the process is to produce an executable program or module that may be stored and executed on the microcontroller or microprocessor. The microcontroller and/or digital signal processor may be in a device such as a cellular telephone.

Debugging tools are available to test the processors and executable code. Application software development requires a level of simulation, observability and controllability of the software within the hardware system being developed. Tools for debugging software in a system context includes simulators and emulators. An emulator is a software development tool that allows software under development to be executed, controlled and viewed in a real hardware environment.

Debugging tools or linkers are configured to accept a given single computer format such as GNU or Microsoft format. It is highly desirable to provide a debugger or a linker that will accept object files of computer formats from different computer vendors.

### SUMMARY OF THE INVENTION

The present invention provides an object file server that can read object codes in multiple computer formats and present a single unified format.

In accordance with another embodiment of the present invention, a debugger is provided that can read multiple object file formats.

In accordance with another embodiment of the present invention, an object file server is provided that writes object code to multiple computer formats.

### DESCRIPTION OF THE DRAWINGS

For a more complete understanding of the present invention, and the advantages thereof, reference is now made to the following detailed description of certain particular and illustrative embodiments and the features and aspects thereof, by way of example only, and with reference to the figures of the accompanying drawings in which:
FIGURE 1 is a block diagram of an object file server in a system according to an embodiment of the present invention.
FIGURE 2 is a flow chart of the operation of the file server according to an embodiment of the present invention.
FIGURE 3 is a visual linker system block diagram with an object file server.

### DESCRIPTION OF THE PREFERRED EMBODIMENTS

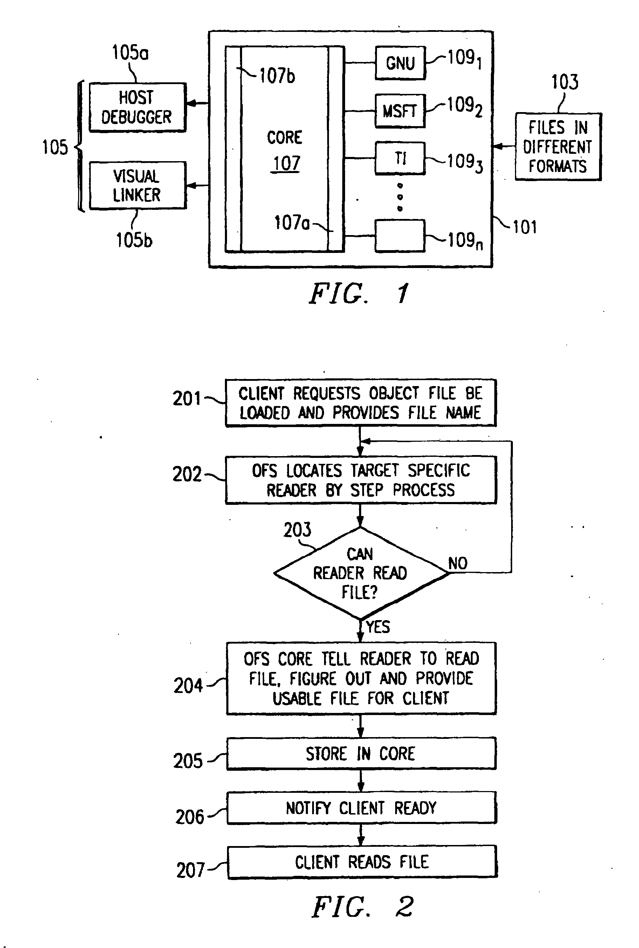

Referring to Figure 1, the object file server 101 is coupled between files 103 and a client 105, such as a host debugger target 105a or visual linker target 105b. The object file server 101 includes a Dynamic Link Library (DLL) core object file server 107 and target specific DLL readers 109₁-109ₙ. The files may be, for example, GNU/ARM format files, Microsoft ARM format files or Texas Instruments TI COFF object files and ARM object format files 103. For each file format, the object file server 101 provides a target specific DLL reader 109₁-109ₙ. The operation of the object file server 101 is illustrated in Figure 2. In the first step 201, the client 105 (host target debugger or visual linker for example) requests file be loaded and gives a file name. The object file server 101 locates the target specific reader 109₁-109ₙ in step 202. One by one each reader 109₁-109ₙ looks at the file in step 203 and determines if it can read the object file format the client requests. When each reader 109₁-109ₙ reads the raw data in the object file, it examines the first few bytes in the file to determine which format the data is in. The file ends up getting read into the core server 107 to look at it. An interface 107a in the core 107 is exposed so the reader 109₁-109ₙ calls back to the core 107 and starts sending information and the core 107 builds its own representation of what is in the file. The object file contains a number of sections associated with the sections is a name, starting address, local address, length, kind, relocation information and data. The object file also contains global variables and local variables. If the file can be read (step 204) the OFS (step 205) core server 107 tells the reader 109₁-109ₙ to read the file, figure it out (decode information program and debug information) and pass it into the core 107 to amass (store) all information. If no, the OFS goes to the next reader and repeats till a reader is found. Once OFS core 107 receives the information, the client 105 is told it is ready to read and the client reads the file.

You may access all information from the object file:
a. section information
b. global variables
c. local variables
d. call stack information
e. actual data in each section
f. relocation information, for each relocatable object file
g. user defined types. These include the C++ "struct","union","class", and "enum" types declared in the user's code.

The following is a list of OFS interfaces 107b for the client. Not all interfaces are listed, just the major ones:
1. Cobject_file_server. This C++ class is used only once, to read in one object file. You create an object of this type, and then ask it to read in an object file.
   a. Some object files do not specify "Big endian" or "little endian", so the OFS user must specify:
      void set_target_endian (bool is_big_endian);
   b. Read in an object file, given the name:
      Cofs_file_info_ * read_object_file (char* file_name);
   c. Read in an object file from an archive. This interface does not specifically know what kind of archive you have, just that you have opened a C "FILE", have put the current file pointer to the correct spot in the file, and can specify how many bytes are in this object:
      Cofs_file_info * read_object_file_from_archive (FILE* file_ptr, int size / * bytes */);
   d. Get an error description:
      enum ofs_error_codes get_error (Strings & error_string);
   e. C++ programs will produce "mangled names" for procedure names. This procedure will help to produce a demangled, or "normal" looking name for the procedure name or variable name:
      static char* demangle_name (char* mangled_name, bool full_name, bool & success);
   f. the product versdion string may be helpful:
      const char * get_product_version ( ) const;
2. Cofs_file_info. Once you have read in an object file (by asking the Cofs_object_server to do so), this class will offer access to all the data in the object file.
   a. All object files will have an endian-ness associated with them:
      bool is _big_endian ( ) const;
   b. The object files read in may currently be compiled for the following architectures:
      ARM, TI C60, TI C54x, TI C55x, TI C27x, TI 2xx, TI 50, TI C3x/C4x
      To find out which architecture applies to this object file:
      int get_processor_type ( ) const;
   c. All object files have a starting address:
      ofs_target_address get_starting_address ( ) const;
   d. All object files will have a number of sections:
      int get_num_sections ( ) const;
      Cofs_section_info * get_ section ( int index ) const;
   e. All object files have a number of global symbols. These will include global variables, C/C++ functions, assembly functions, and some absolute values given by the linker:
      int get_num_global_symbols ( ) const;
      Cofs_symbol_info * get_global_symbol ( int index ) const;
   f. To look up global symbols:
      int find_global_symbol ( ofs_target_address addr ) const:
      int find_global_symbol ( const char* name ) const;
   g. For C/C++, the user's struct/union/class/enum's, otherwise known as User Defined Types (UDT), may be accessed:
      int get_num_udt ( );
      TYPE * get_udt (int index );
      TYPE * add_a_udt ( TYPE* the_type );
      TYPE* find_udt ( const char* name ) const;
   h. C/C++ line number information is also generalized:
      Cofs_line_num_entry* lookup_line_num_from_address ( ofs_target_address
      address, Cofs_function_info*& function );
3. Cofs_section_info. There will be one of these objects for each section in the object file.
   The following information may be accessed for each section:
   * name
   * size in bytes
   * a pointer to the raw section data
   * the "run location" and the "load location"
   * memory page number
   * relocation entries for this section
   * flags, including "is_writeable", "is_allocated", and "is_exec_instructions".
4. Cofs_location.
   Many items in an object file have associated locations:
   * global variables
   * global procedures
   * local variables
   The Cofs_location object is generalized, and may be made up of various types of information:
   a. register numbers
   b. offsets from a register
   c. absolute addresses
   d. an indication of "indirect", meaning that the debugger/user would read the value at the currently indicated address/register, and then use that value as the address indicated.
   e. a "number of bits" used in the address. This concept occurs when you have different sized memory models. For example, in the TI C54x product, an address is normally 16 bits long, but in "large memory model" an address is 22 bits long.
5. Cofs_lexical scope.
   A lexical scope consists of a low address and a high address.
   a. functions. The lexical scope indicates the valid PC values of the function.
   b. local variables. Variables in a procedure may have the entire lexical scope of the procedure, but if a sub-scope is introduced, then the lexical scope will be smaller than the entire procedure.
6. Cofs_iine_num_entry.
   line number entries consist of:
   a. a file name
   b. a line number
   c. an address
   Each line of C/C++ code will produce a line number entry.
7. Cofs_symbol_info.
   Each symbol in the object file will have an associated Cofs_symbol_info object. Information included in the symbol includes:
   a. name
   b. type (A generalized type model is used to encompass the entire C++ type model).
   c. section number that this symbol is in.
   d. symbol type (variable, function parameter, function, absolute symbol).
   e. symbol scope (global, static, local).
   f. a list of location/ranges. This info only applies to local variables.
      we may indicate this information thru the location/ranges.
   g. lexical scope.
   h. if this is a function, it will have a Cofs_function_info, described next.
8. Cofs_function_info.
   Each function with an object file will be represented by one of these objects. Note that there will already be a Cofs_symbol_info object objects. Note that there will already be a Cofs_symbol_info object (described above), and this object contains extra info, that only applies to functions.
   Information for each function includes:
   a. local variables
   b. line number entries
   c. call stack information. At any point during the execution of a procedure, a debugger may want to construct a "call stack", to indicate the procedures that called other procedures, leading onto the currently executing procedure. The data necessary to construct a call stack is the "return address", and the "previous stack pointer". This information has been generalized such that the user may request this information, giving the current PC value, and 2 Cofs_location objects will be returned, to indicate the previous frame pointer, and the return address.

The core presents a unified format to the client which may be a debugger. Therefore, with the OFS the debugger can debug various formatted files. The client may also be a visual linker that can link various formatted files.

In accordance with another embodiment of the present invention the separate code can understand how to write the information to a different format. For example a switch on a visual linker selects TI format or Microsoft format for example with a target specific writer. For example the files being loaded may be in TI format and linked in Microsoft format so a Microsoft debugger could understand it.

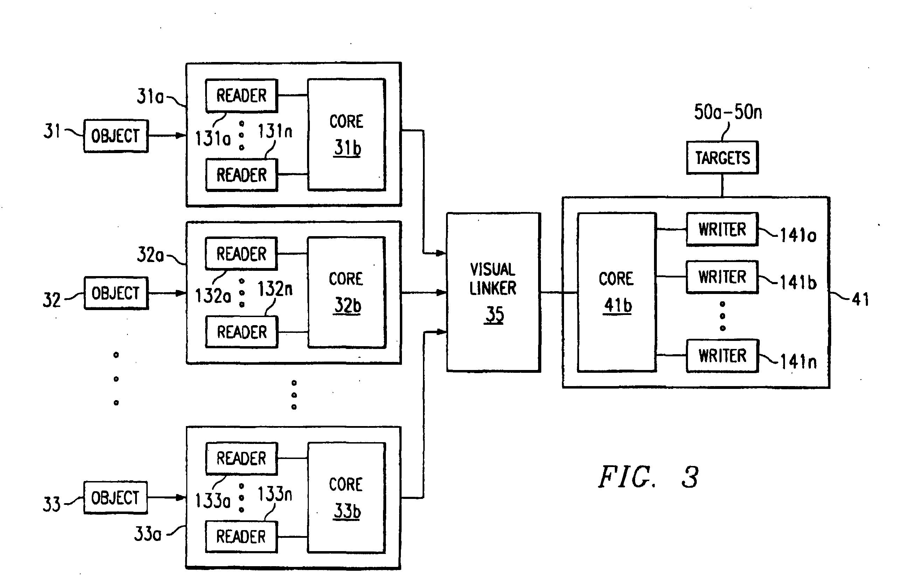

Referring to Figure 3 there is illustrated object files 31-33 to be applied to visual linker 35. There may be hundreds of such files. For each file there is an object file reader server 31a,32a,33a,etc. with DLL target specific readers 131a - 131n, 132a - 133n,133a-133n,etc.and OFS cores 31b,32b,33b,etc. to store and provide interfaces (like 107a and 107b in Fig.1) to the readers and visual linker 35 to provide to the visual linker the information in a single format as disclosed above in connection with Figure 1. The output would include a similar arrangement for writer servers. There is an object file server writer server 41 with DLL target specific writers 141a-141n and corresponding OFS core 41b to store and write to a specific targets 50a-50n in their specific formats with a target specific writers 141a-141n to write out the new executable file. The unified format from the linker 35 would be applied to the writer/core 41b, which then looks for the target specific writers 141a-141n to write to the specific target in the appropriate format.

### Copyright (c) 1998-2000 Texas Instruments Incorporated

The OFS is intended to be a DLL, to be used as a generic reader of object files.
Input files may be:
a. TI COFF/stabs or TI COFF/DWARF for the following targets:
   ARM, C60, Ankoor, Lead, Lead3, C3x, C24x
b. ARM ELF/DWARF. The old AIF/AOF formats are not supported.
c. GNU/ARM/PE/stabs
d. Microsoft WinCE ARM. For this to work, the .pdb file must not be used. Instead, use the pdb:none switch, and delete the /debugtype switch.
HOW TO USE the OFS, to read an object file:
1. Create an object file server:
   ofs::Cobject_file_server* an_ofs = new ofs::Cobject_file-server();
2. Call an_ofs->act_as_a_dumper() if your program is a dumper.
   (This functionality is mainly to automate testing).
3. If you are using the GNU/arm compiler:
   The GNU/ARM executables do not clearly indicate endian-ness. The user is therefore requested to set_tart_endian" before asking the Cobject_file_server to read an object file.
4. Call an_ofs->read_object_file*() with a file name. A non-NULL value should be returned, even if there are errors. If an error has occurred, the OFS will still provide as much info as possible
   Note: do not call read_object_file*() more than once! An OFS object is intended to be used only once. If you wish to read in another file, you may "new" a new Cobject_file_server.
5. Use get_error() to see if the read/load succeeded.
6. You may use an_ofs->get_num_udt() and an_ofs->get_udt() to simply go thru all of the user defined types. (This is useful for the class browser).
7. When you are done with the info, you may:
   delete an_ofs;
For further tips on how to read an object file, examine the "ofs_dump" utility.

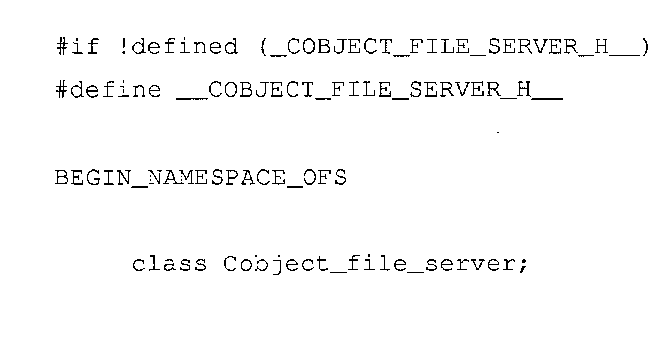

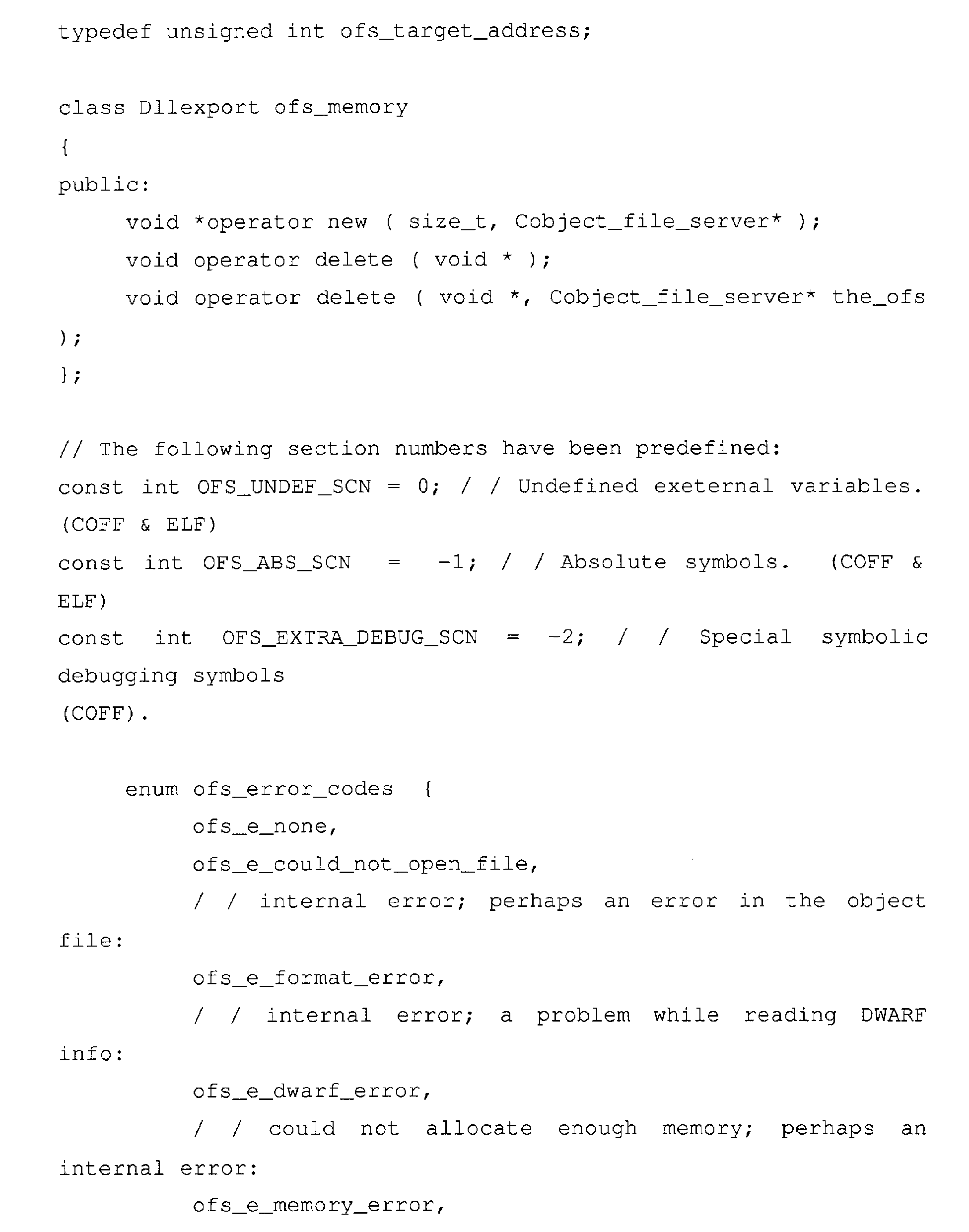

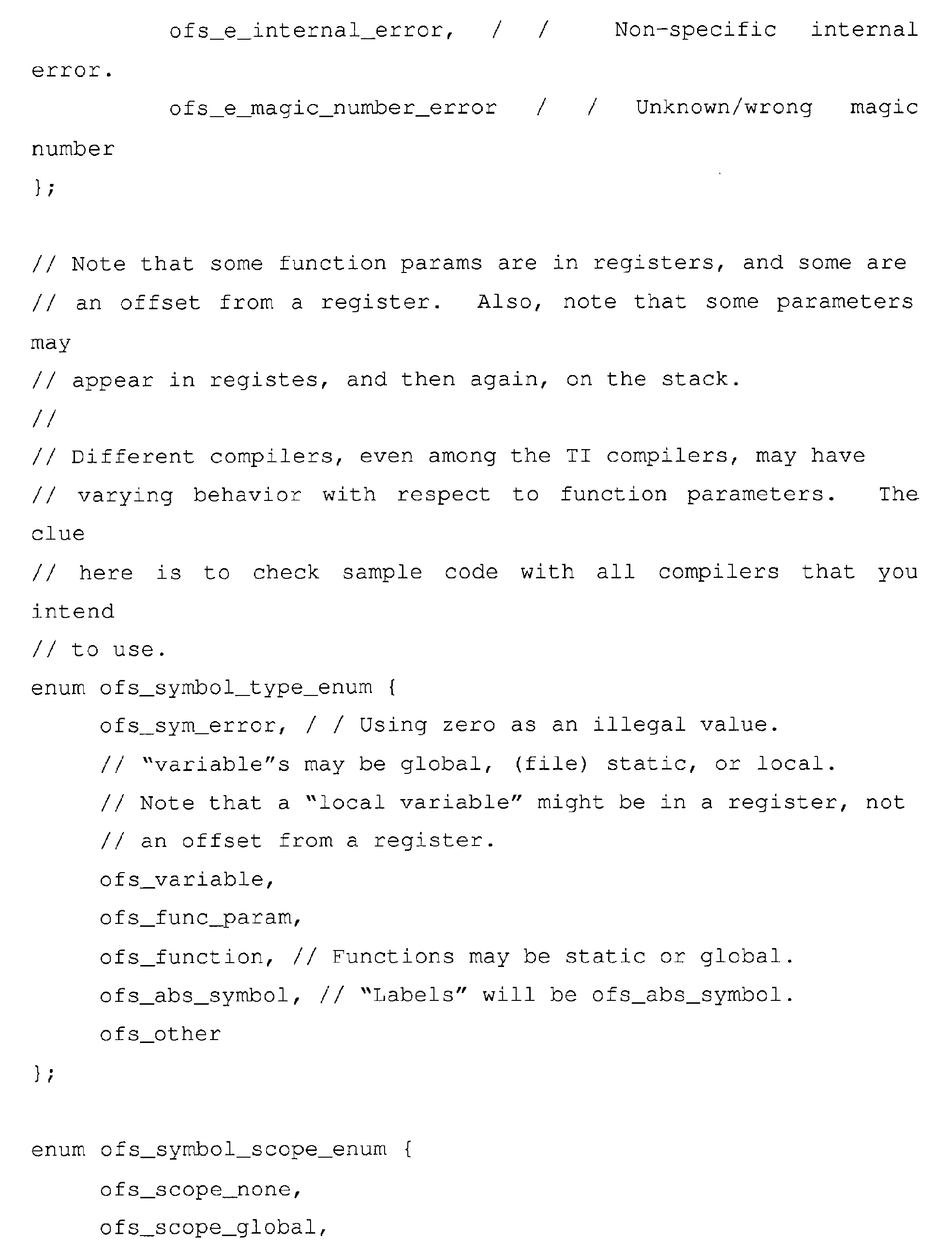

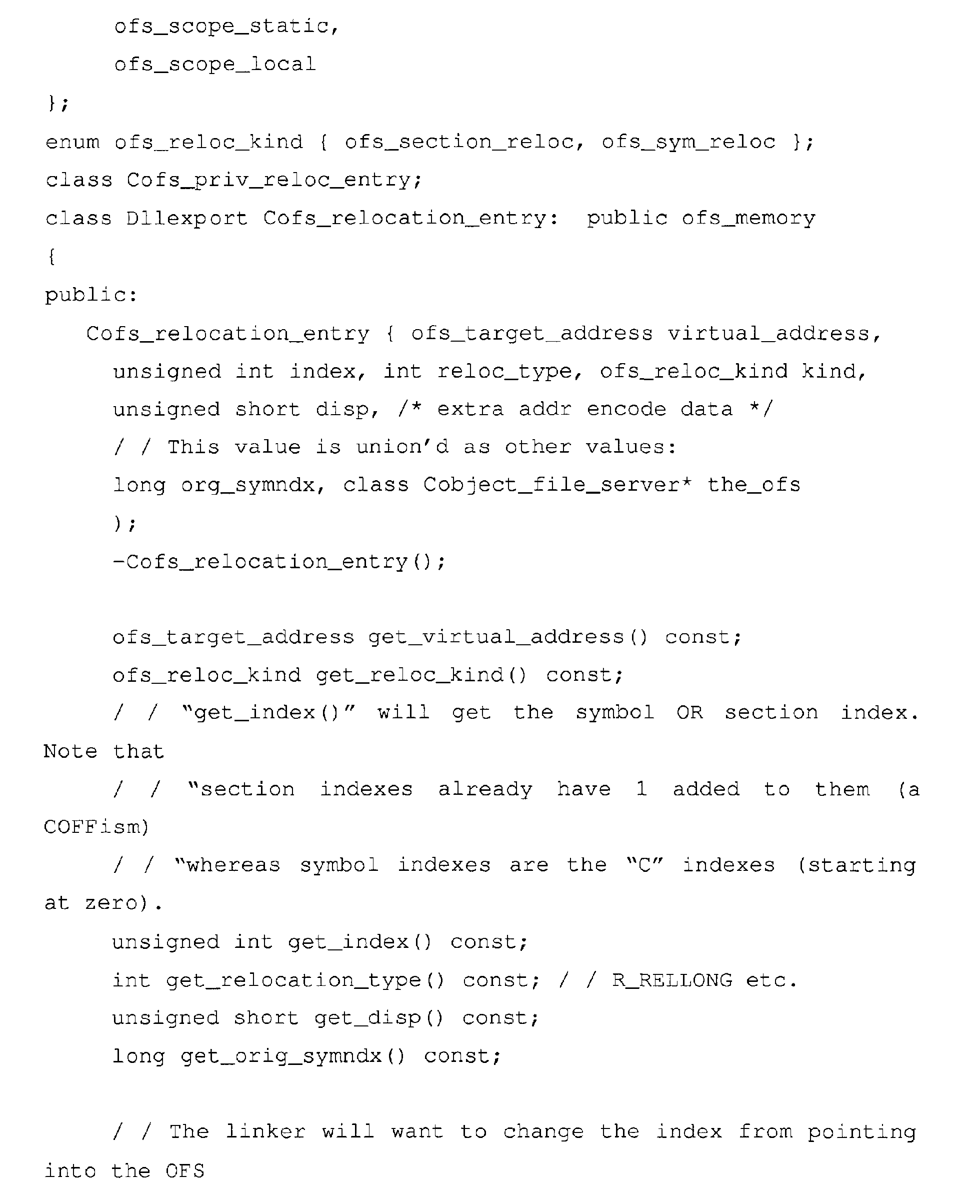

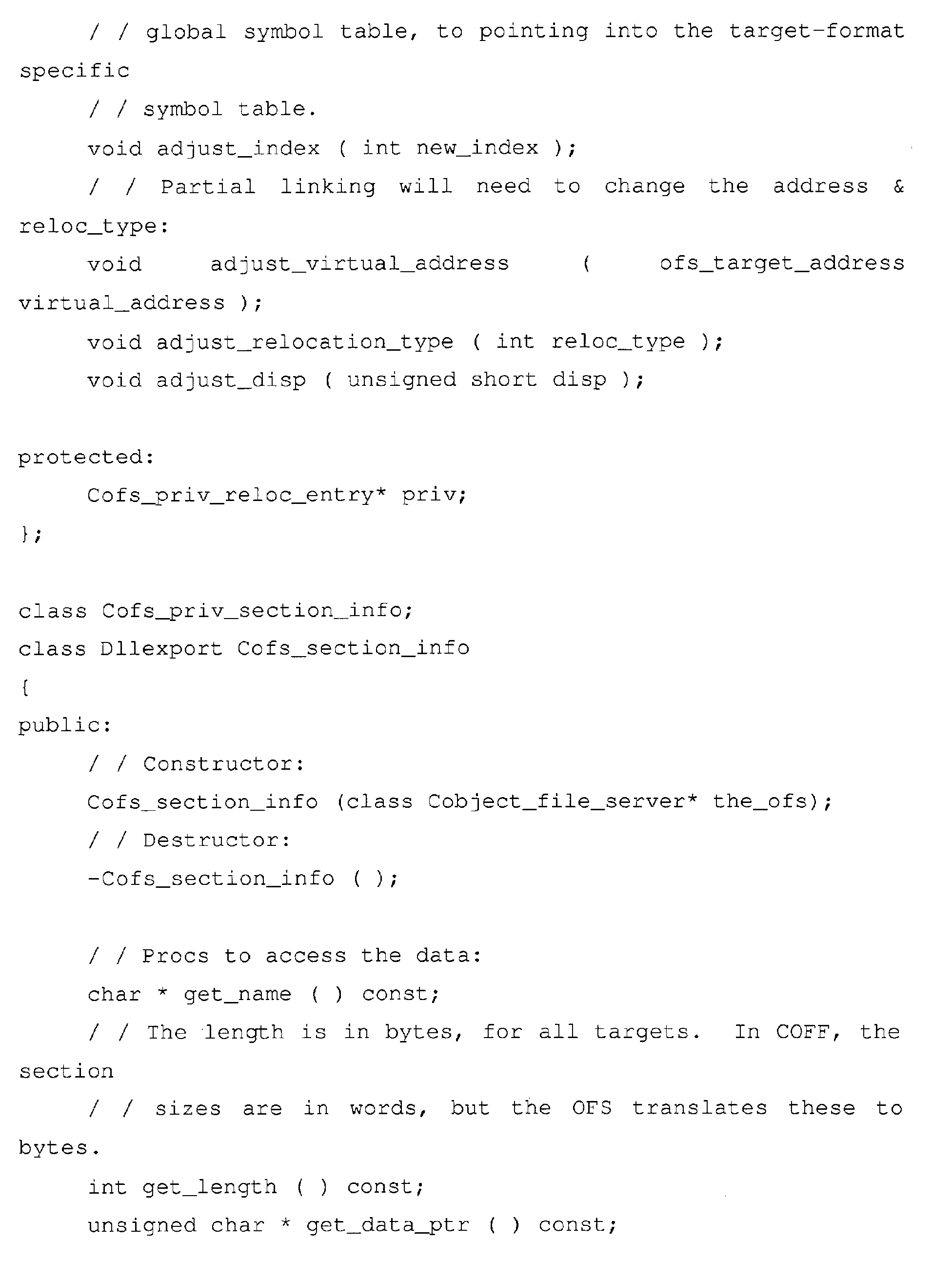

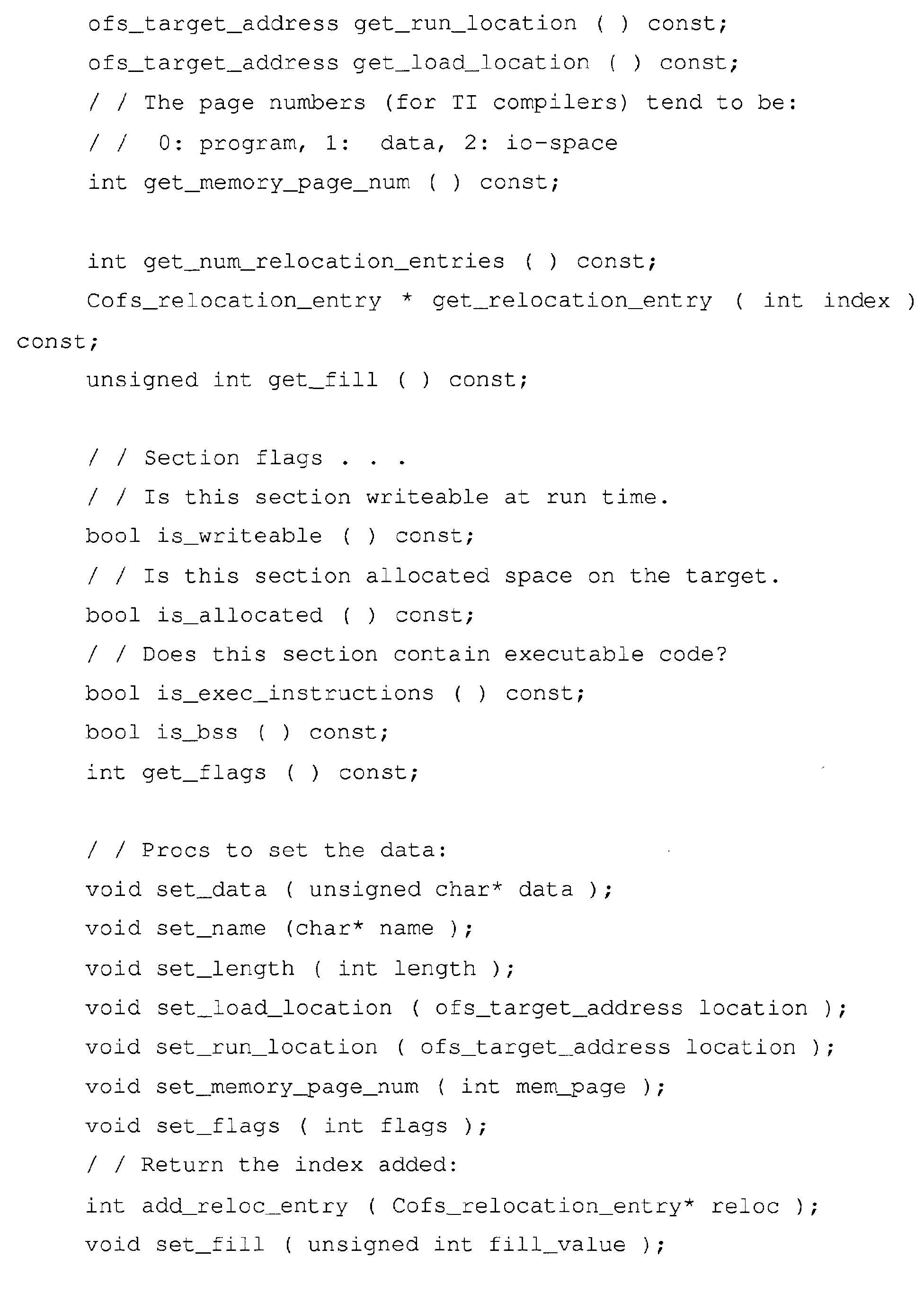

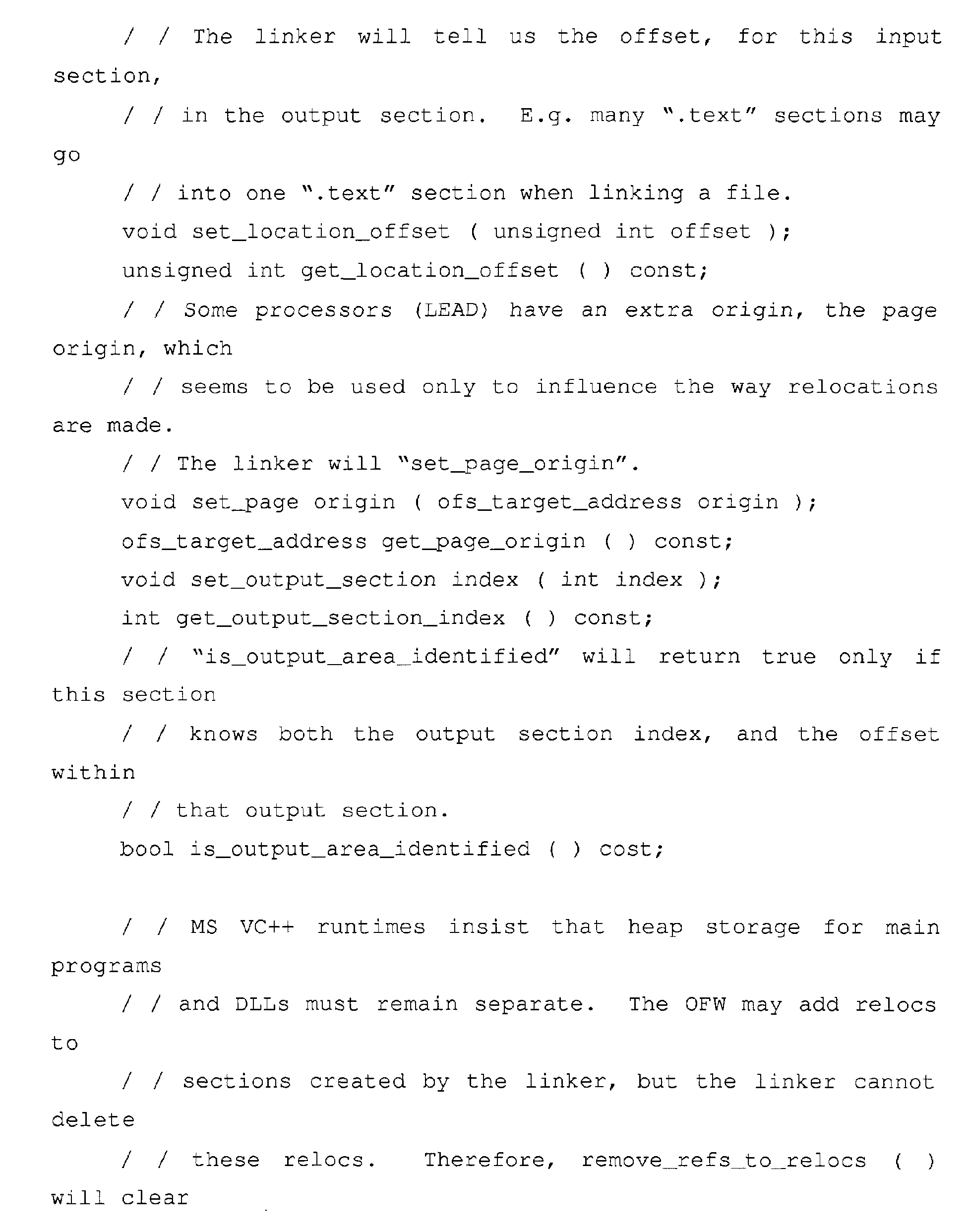

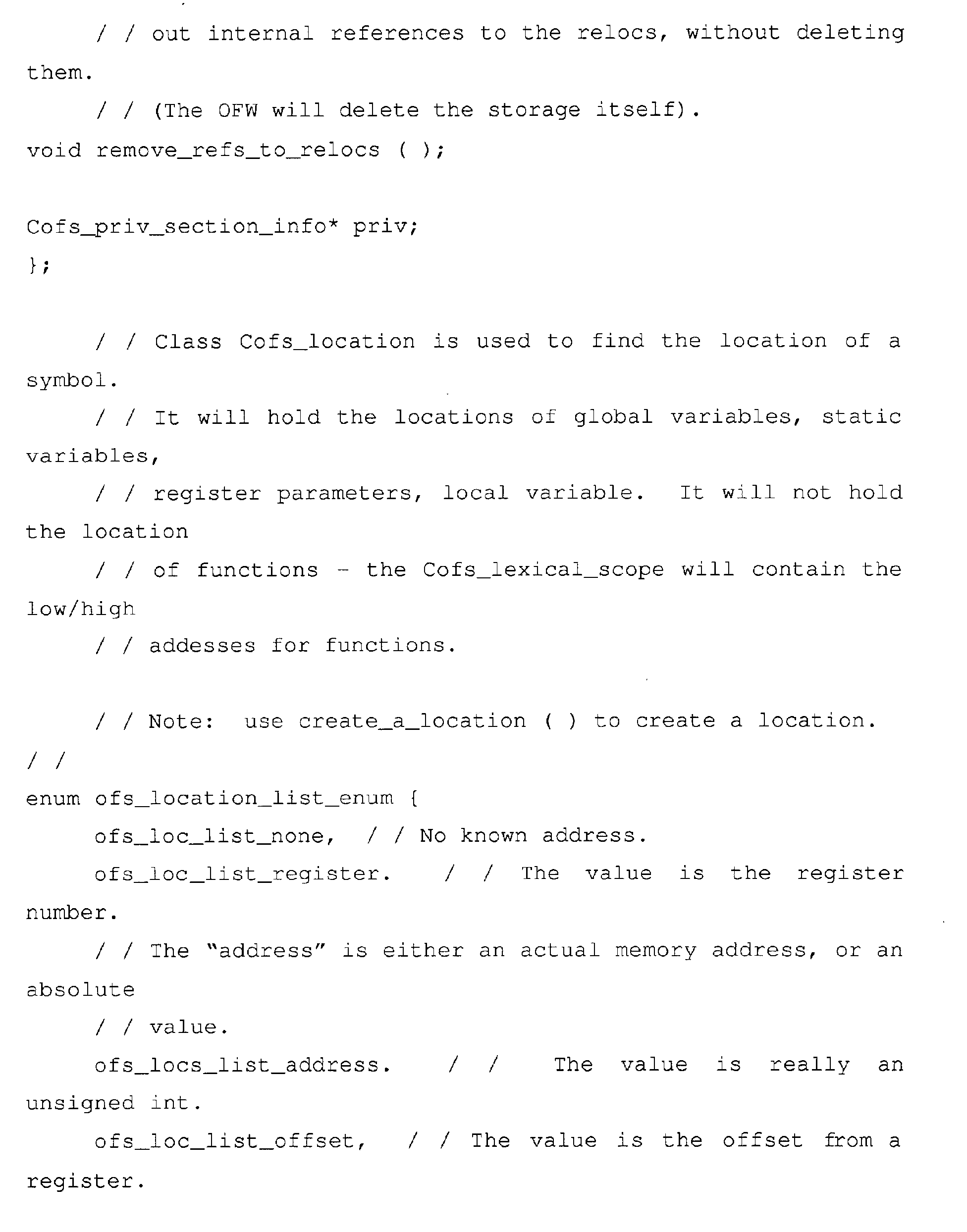

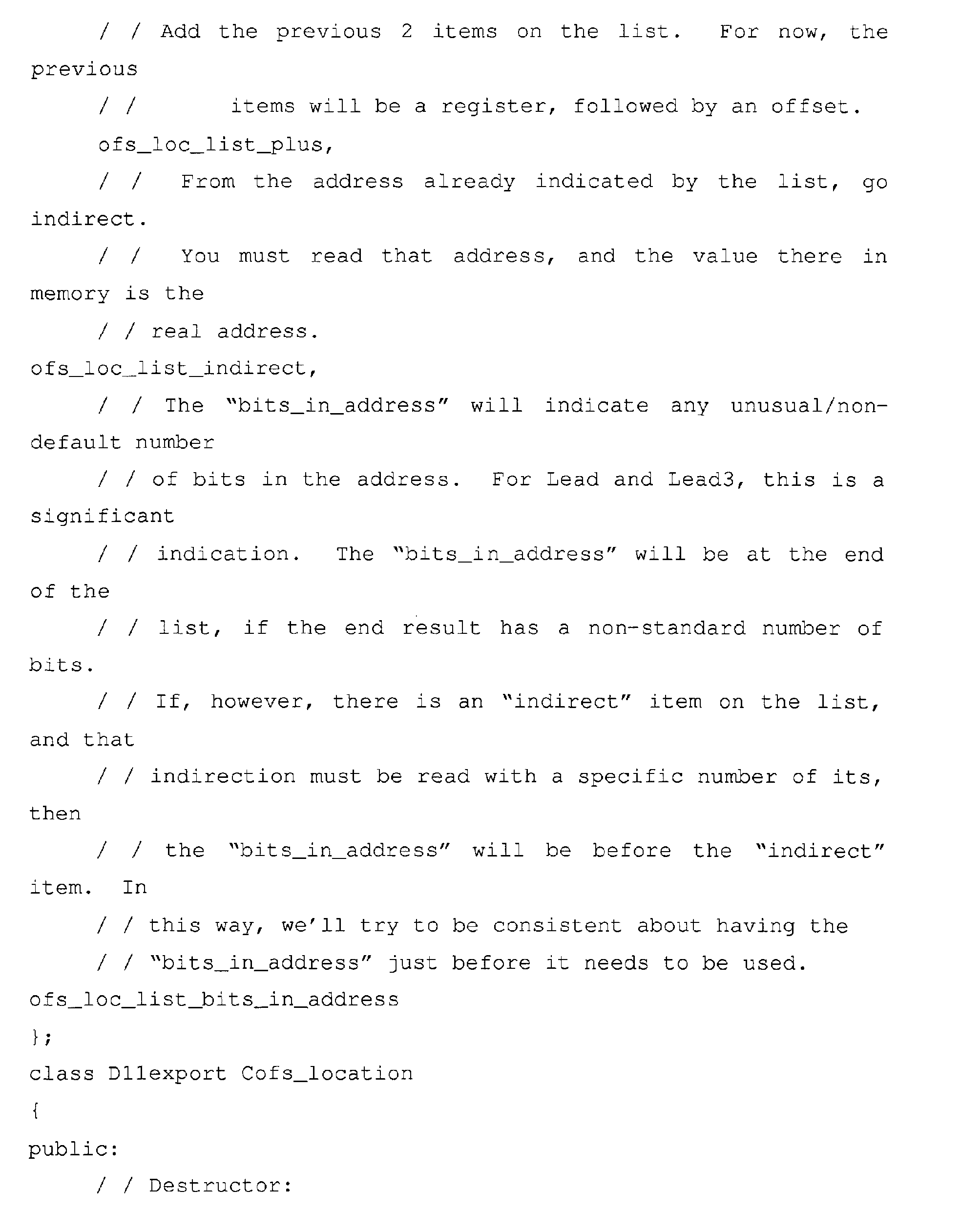

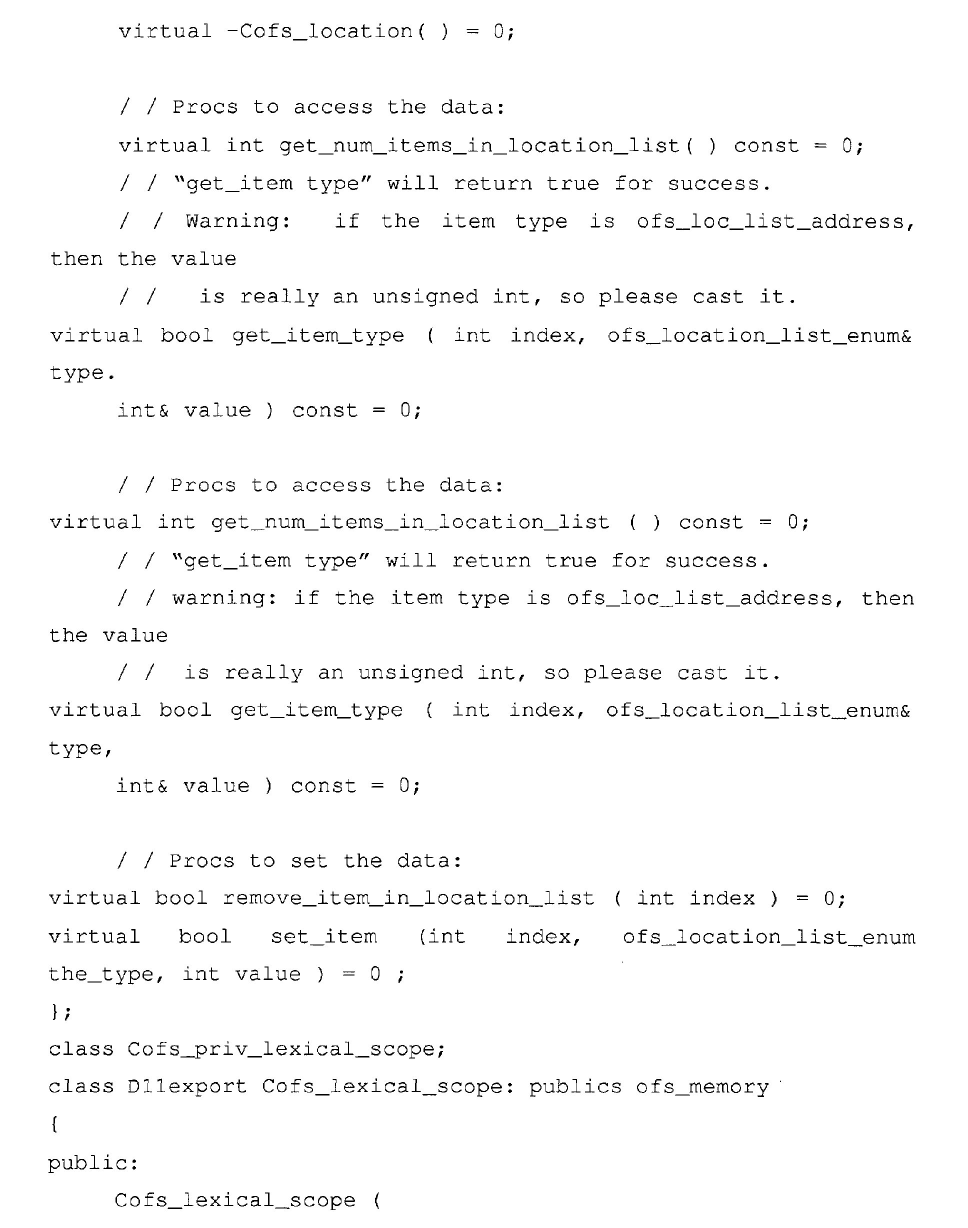

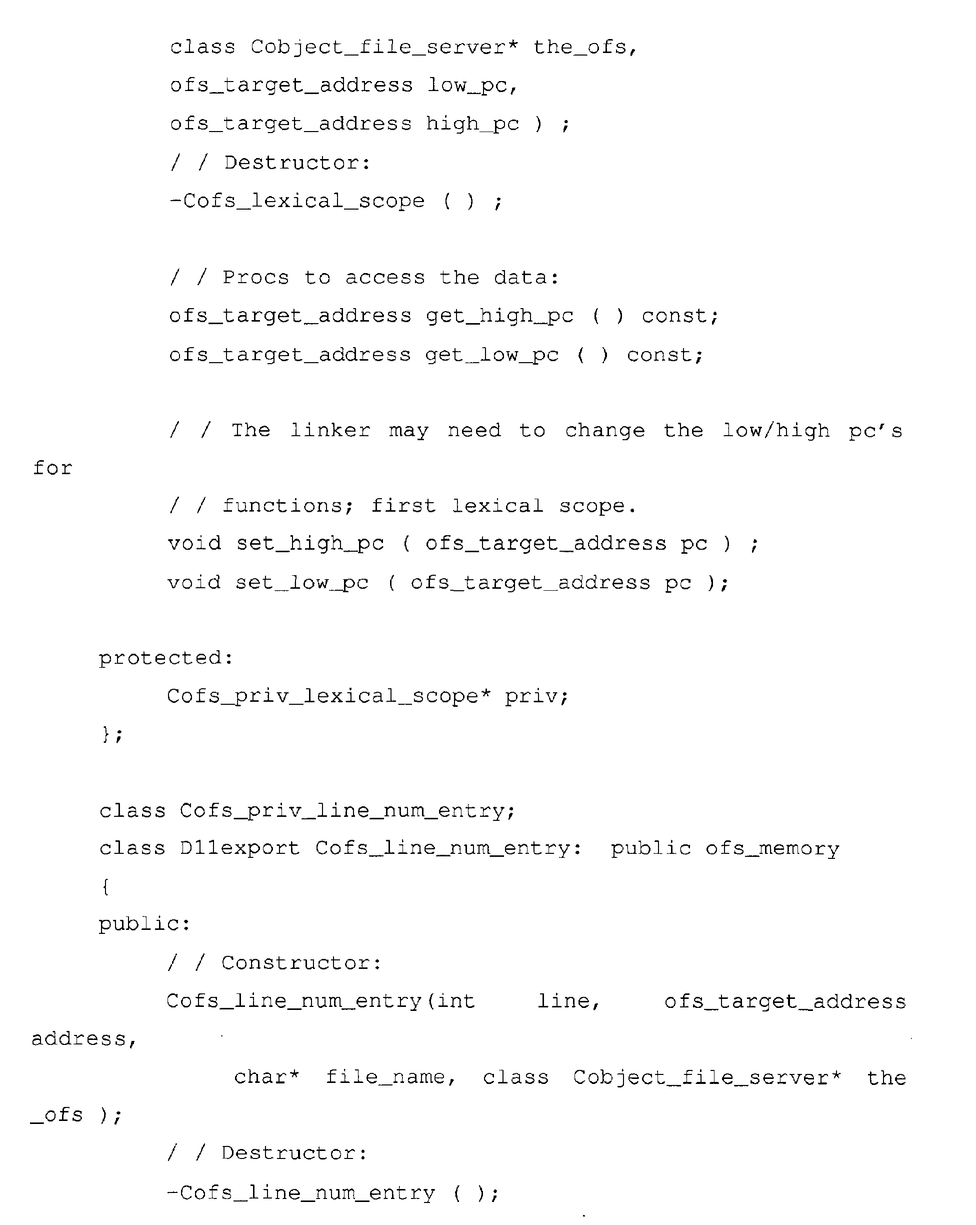

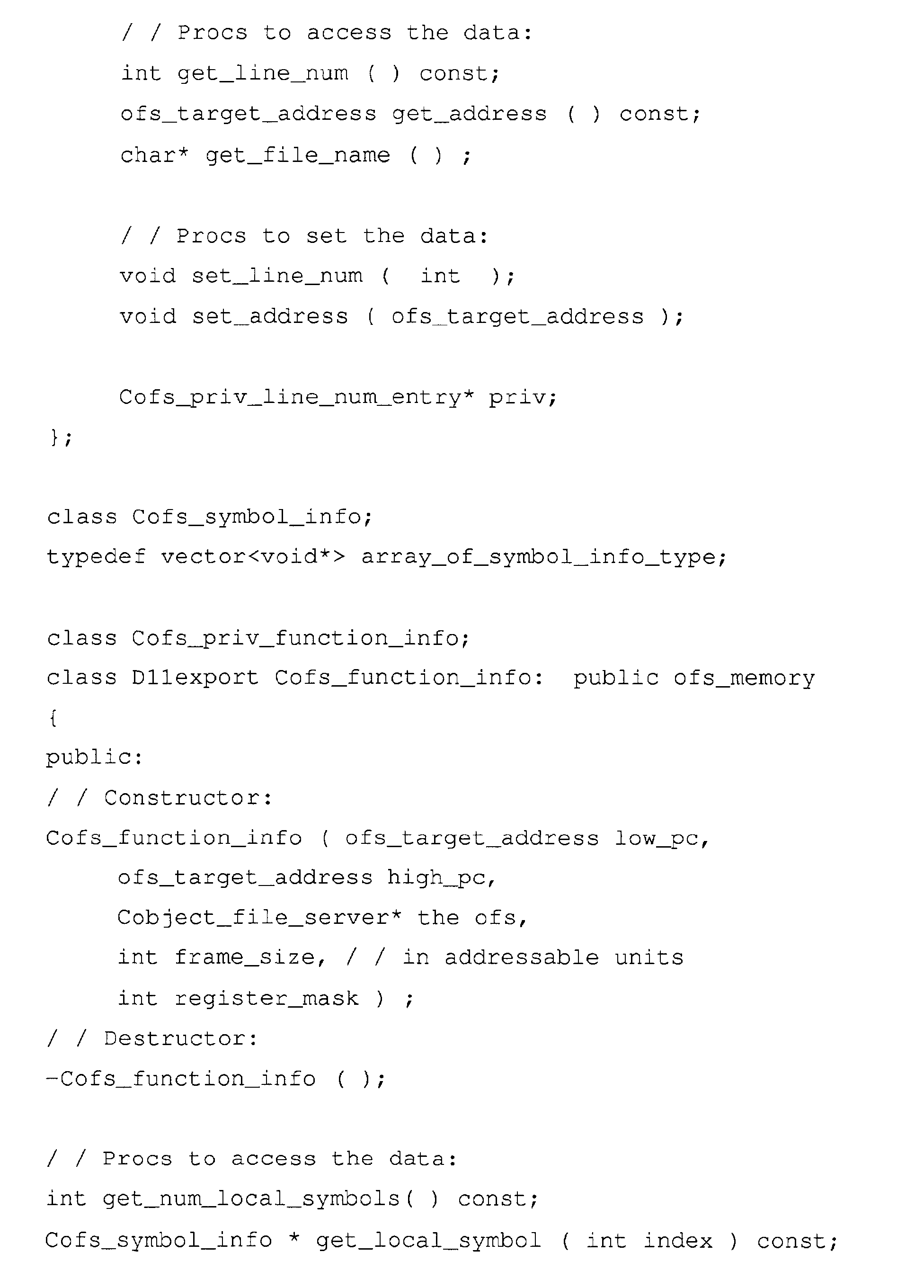

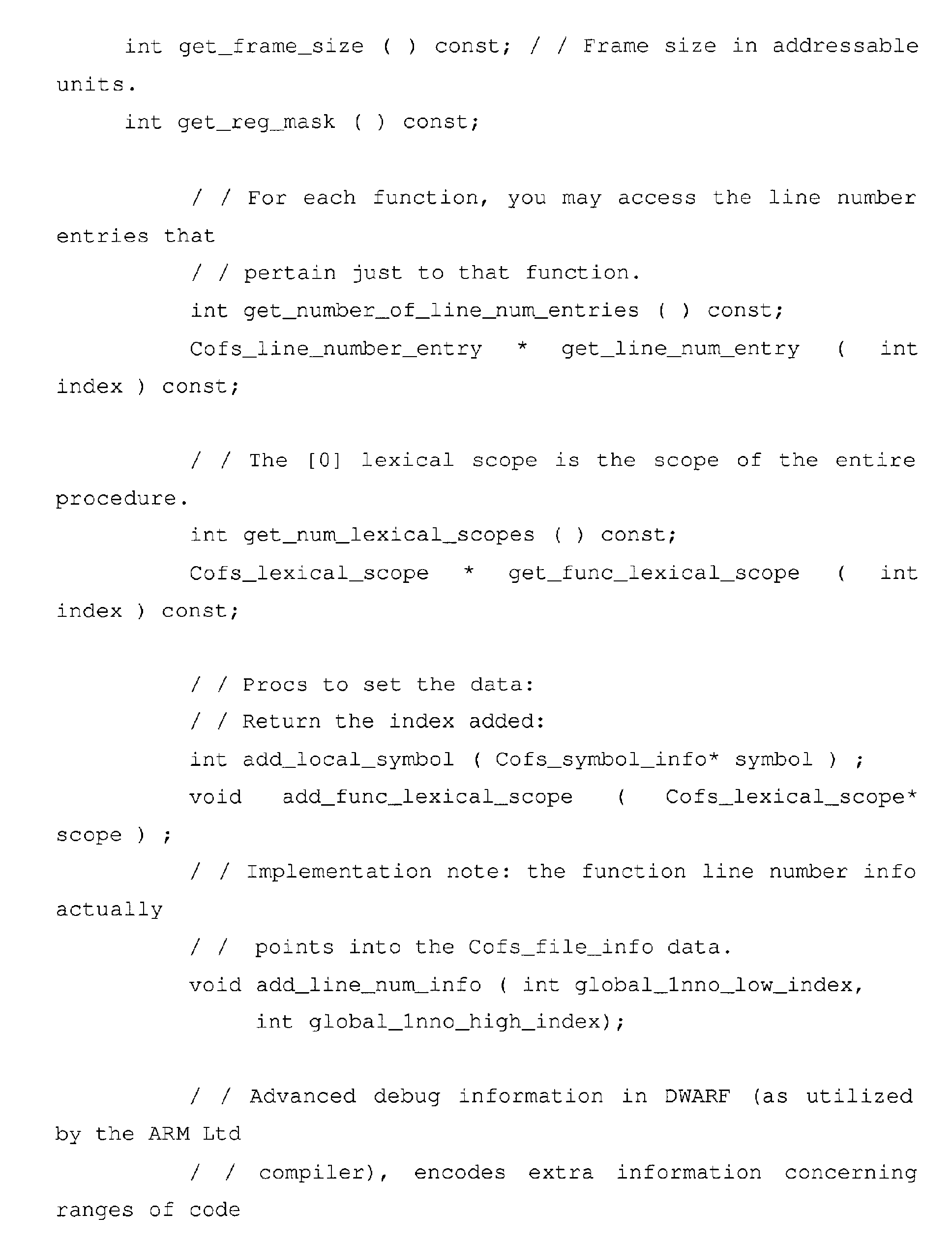

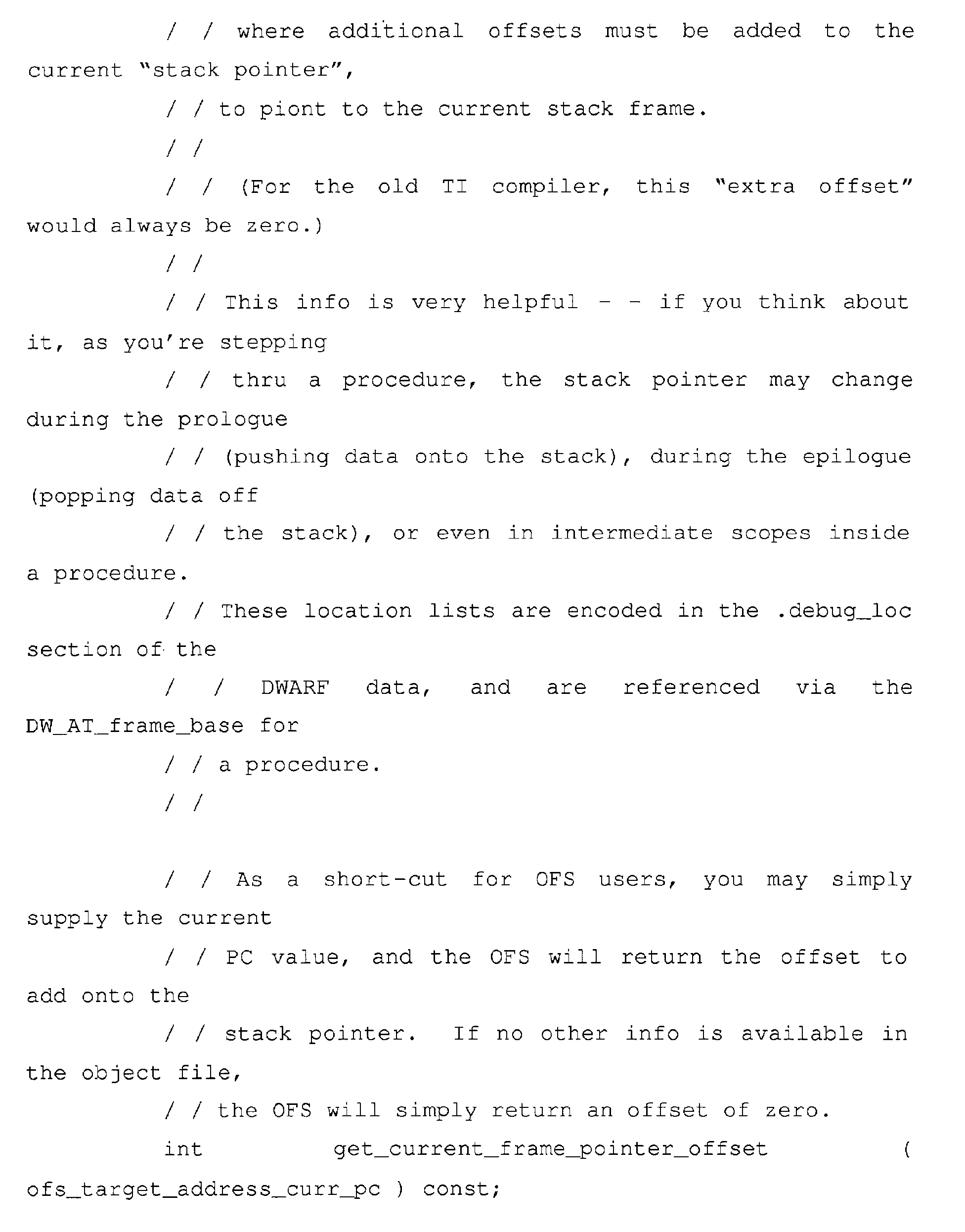

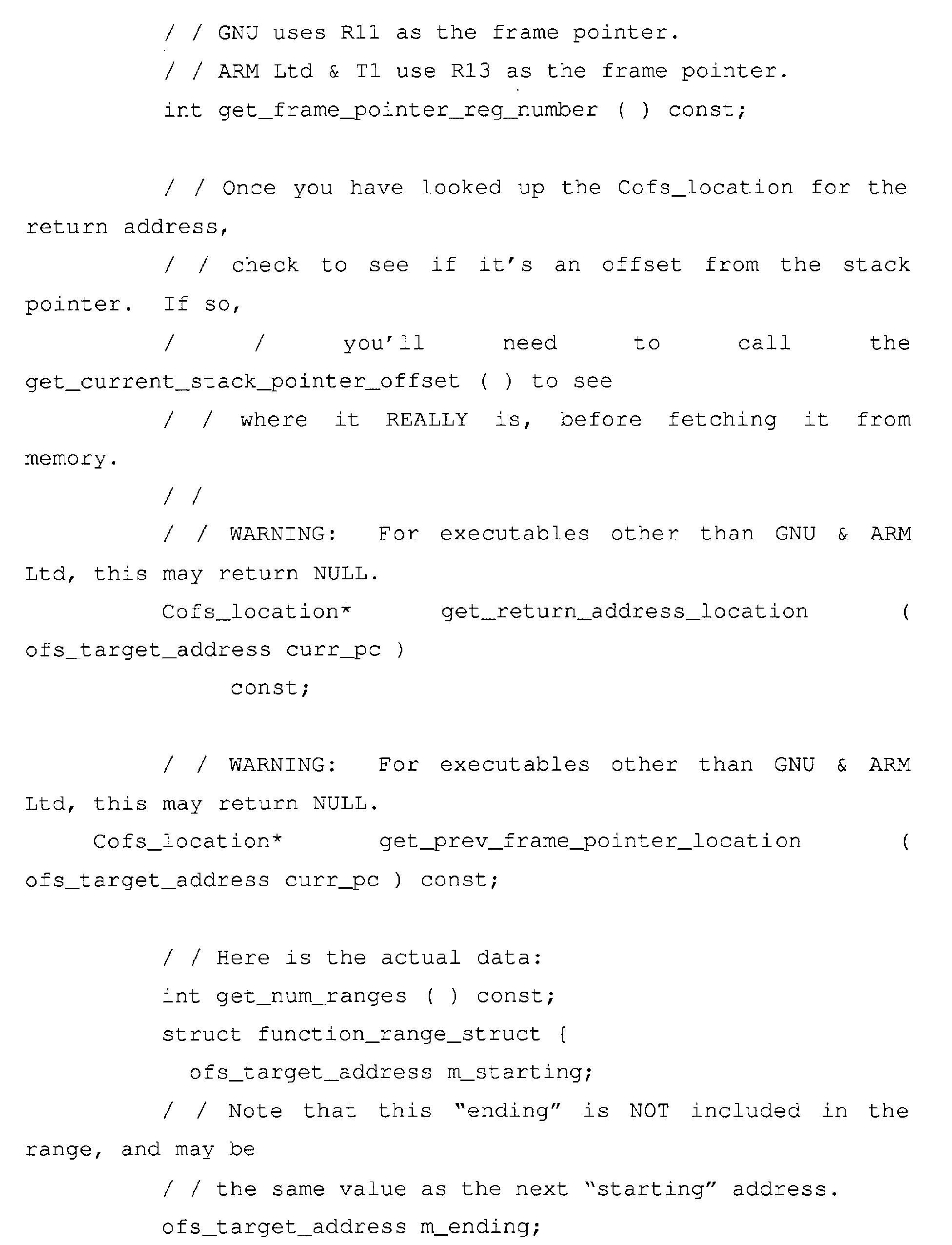

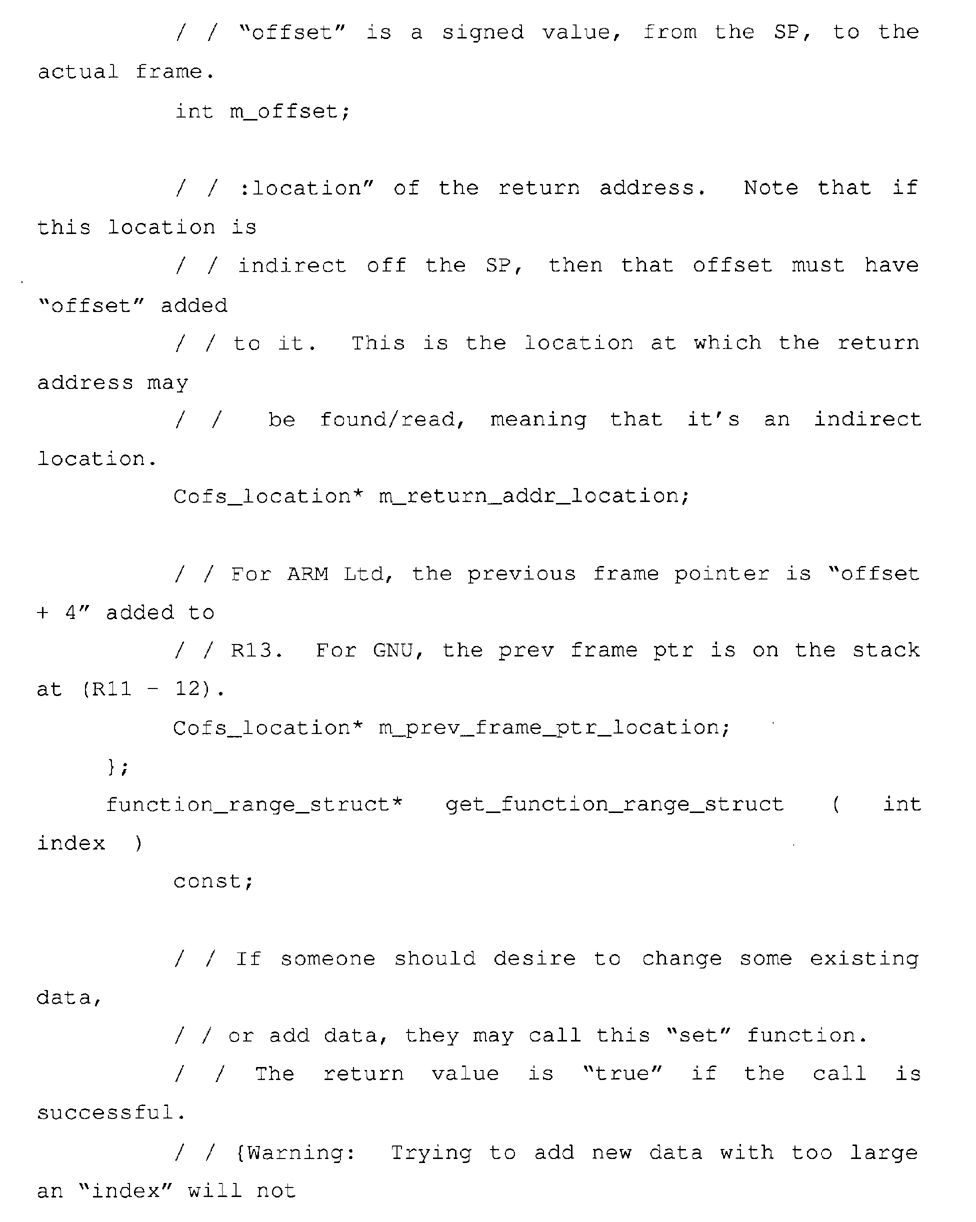

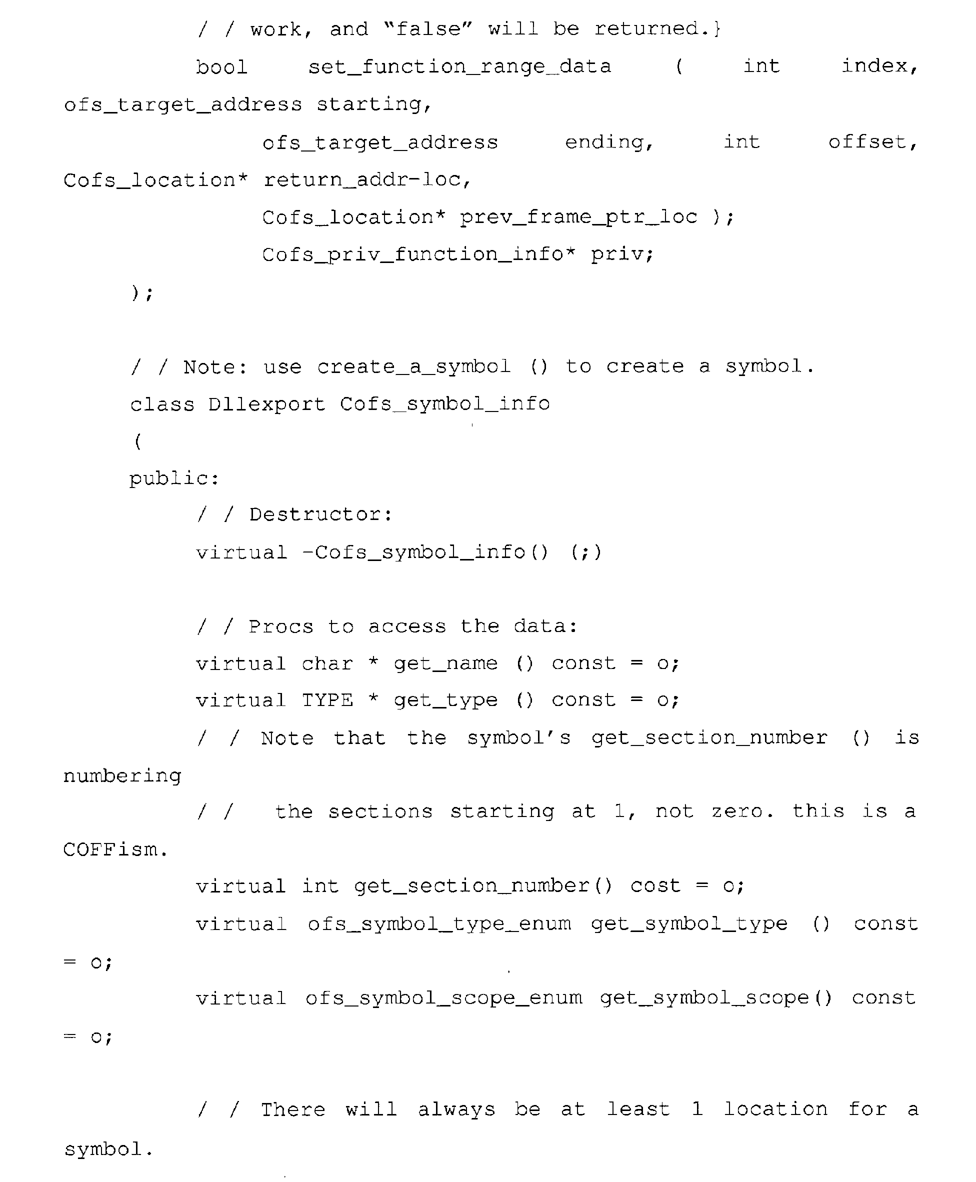

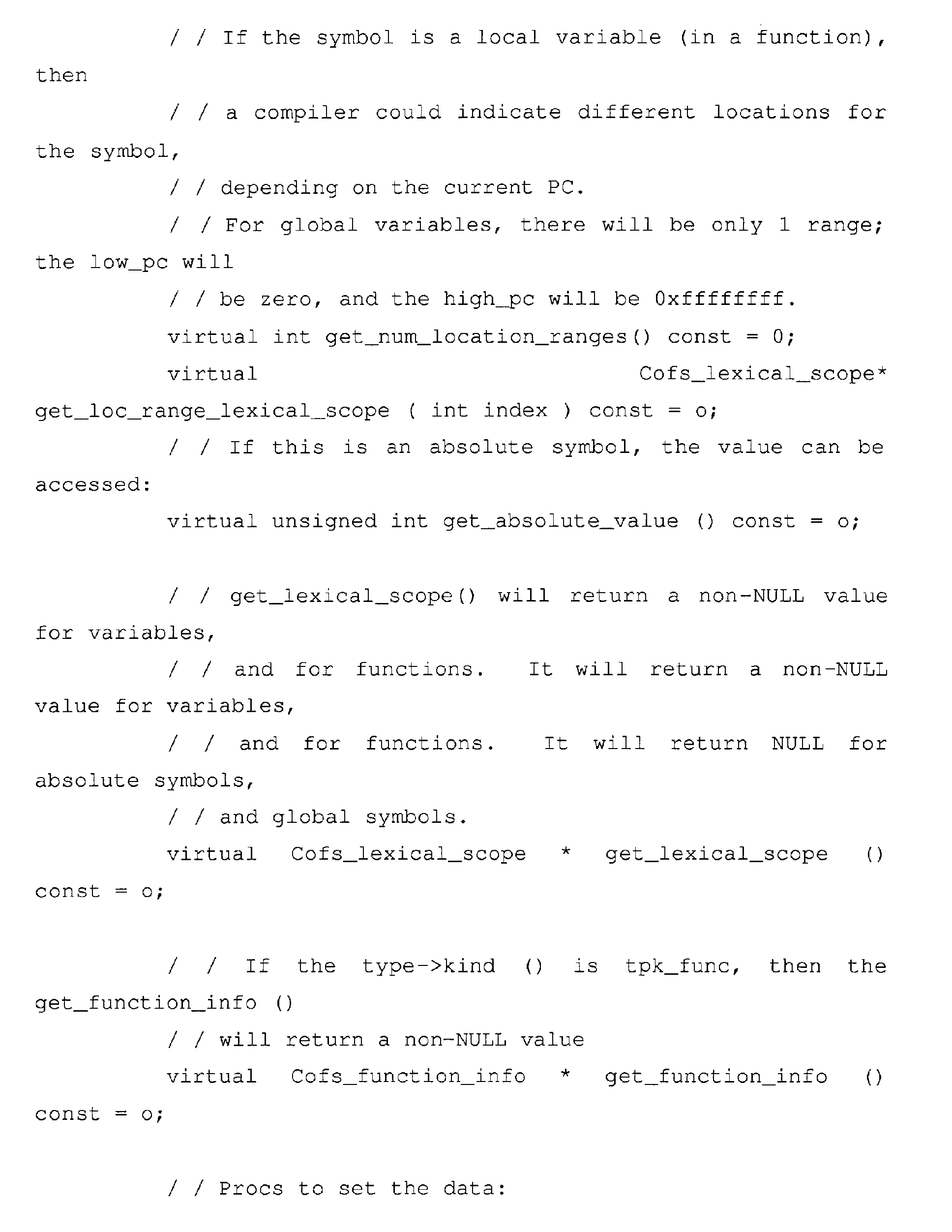

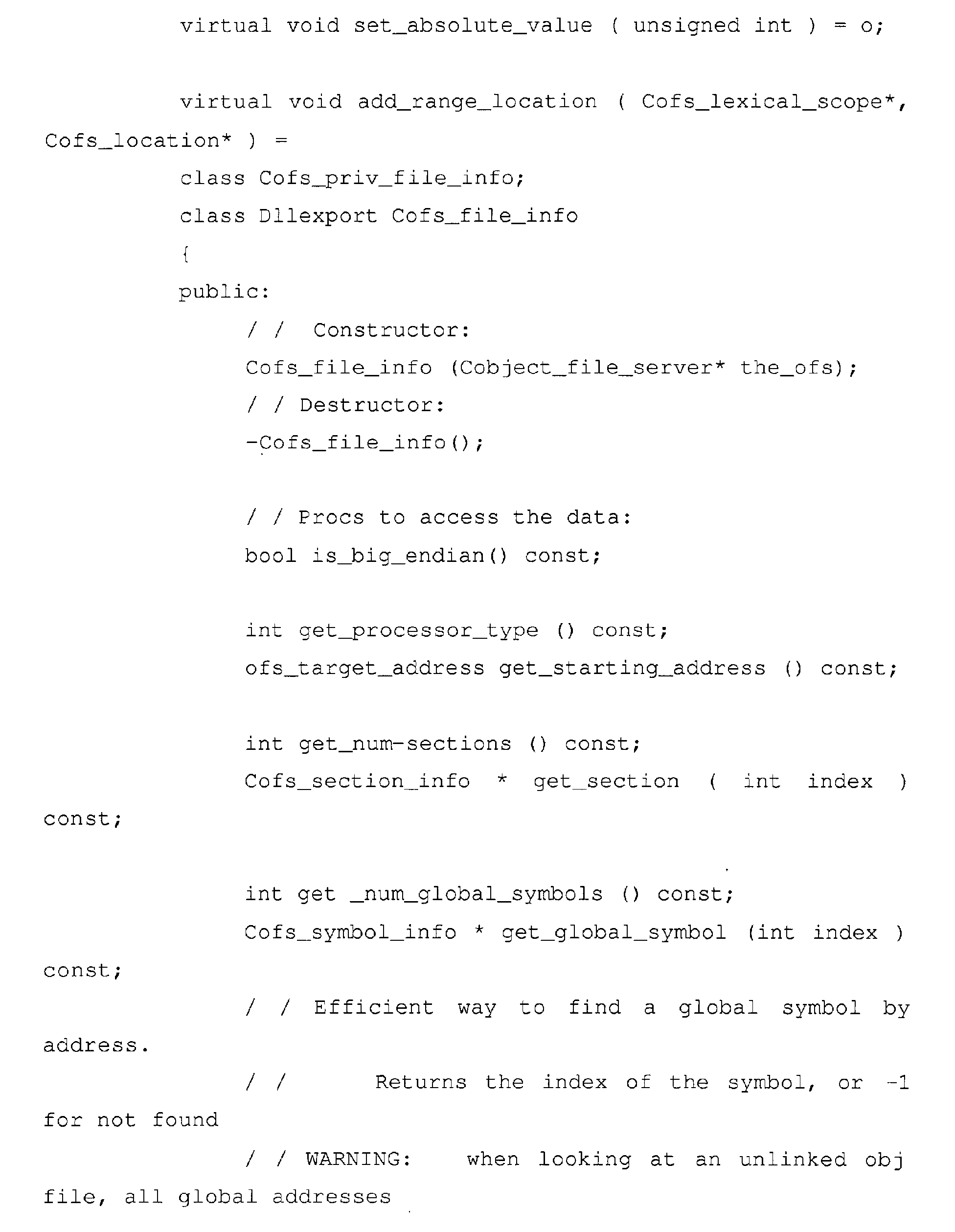

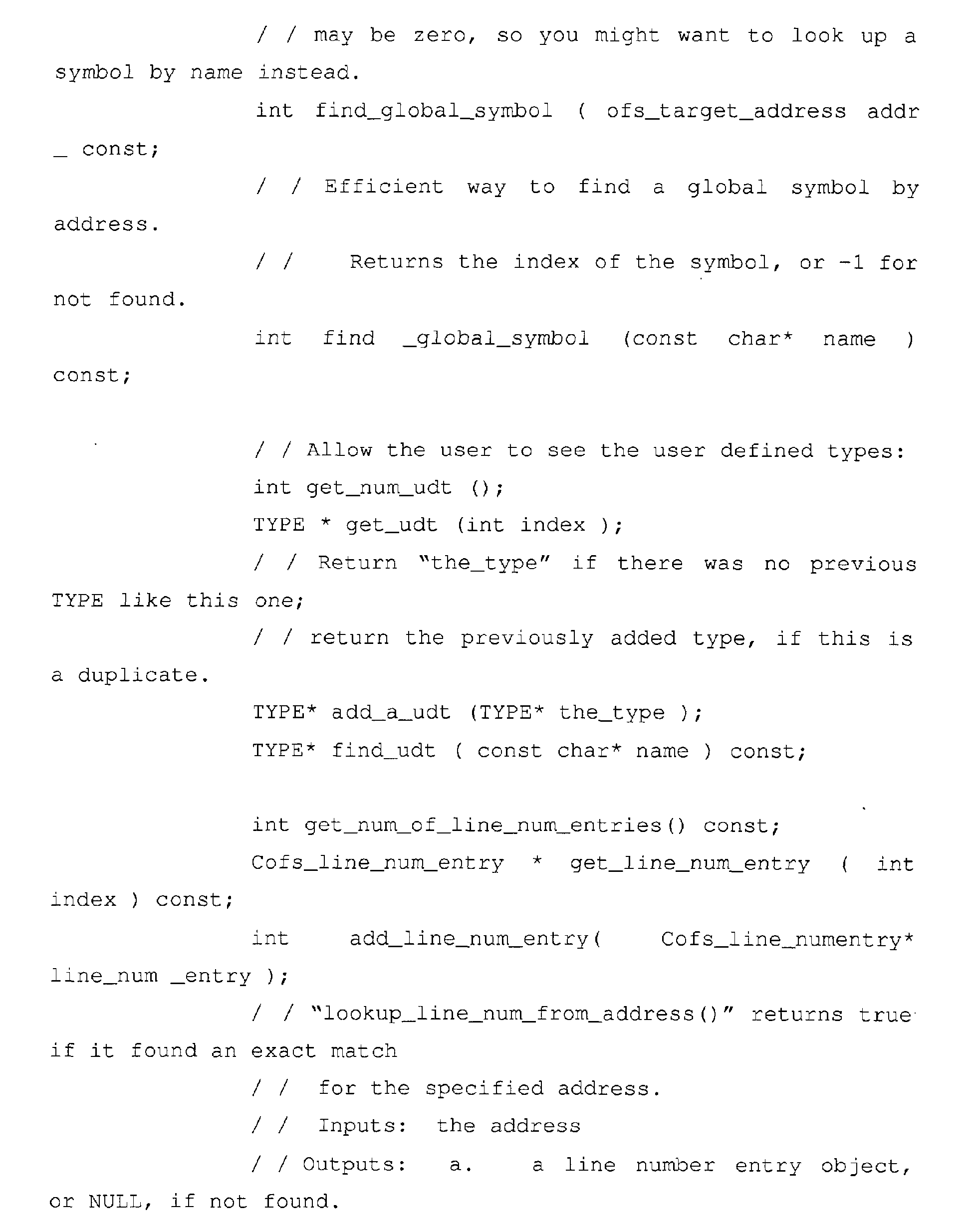

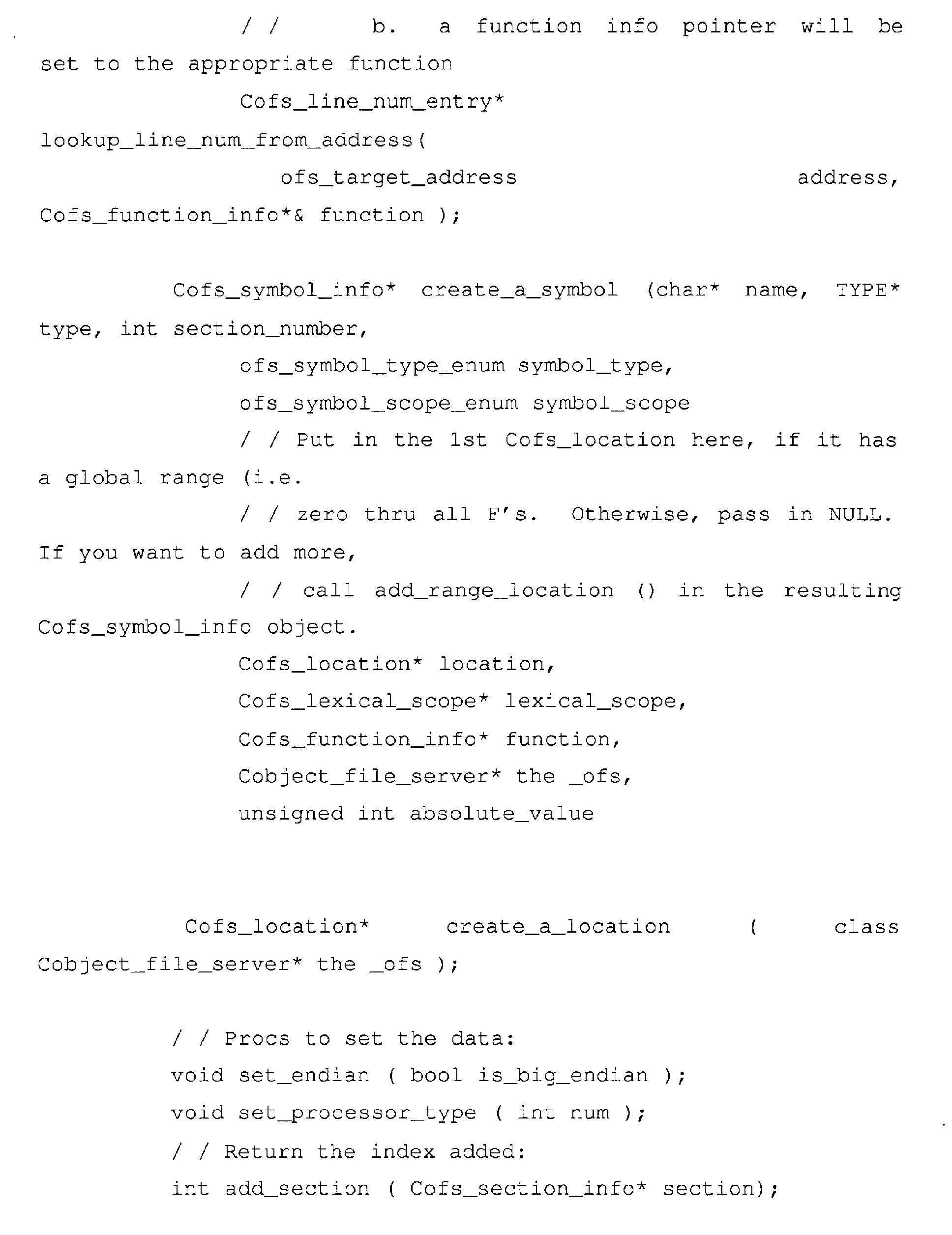

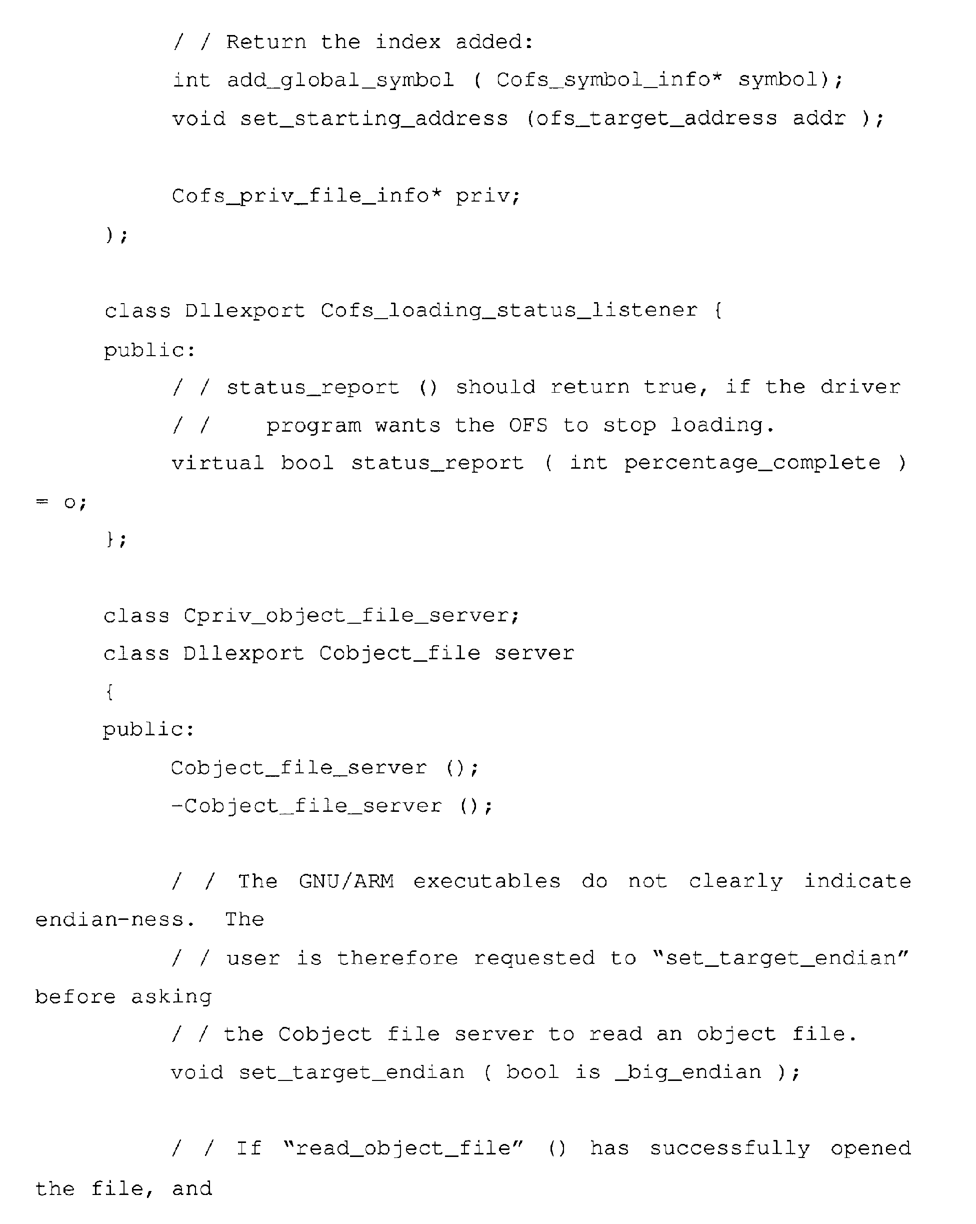

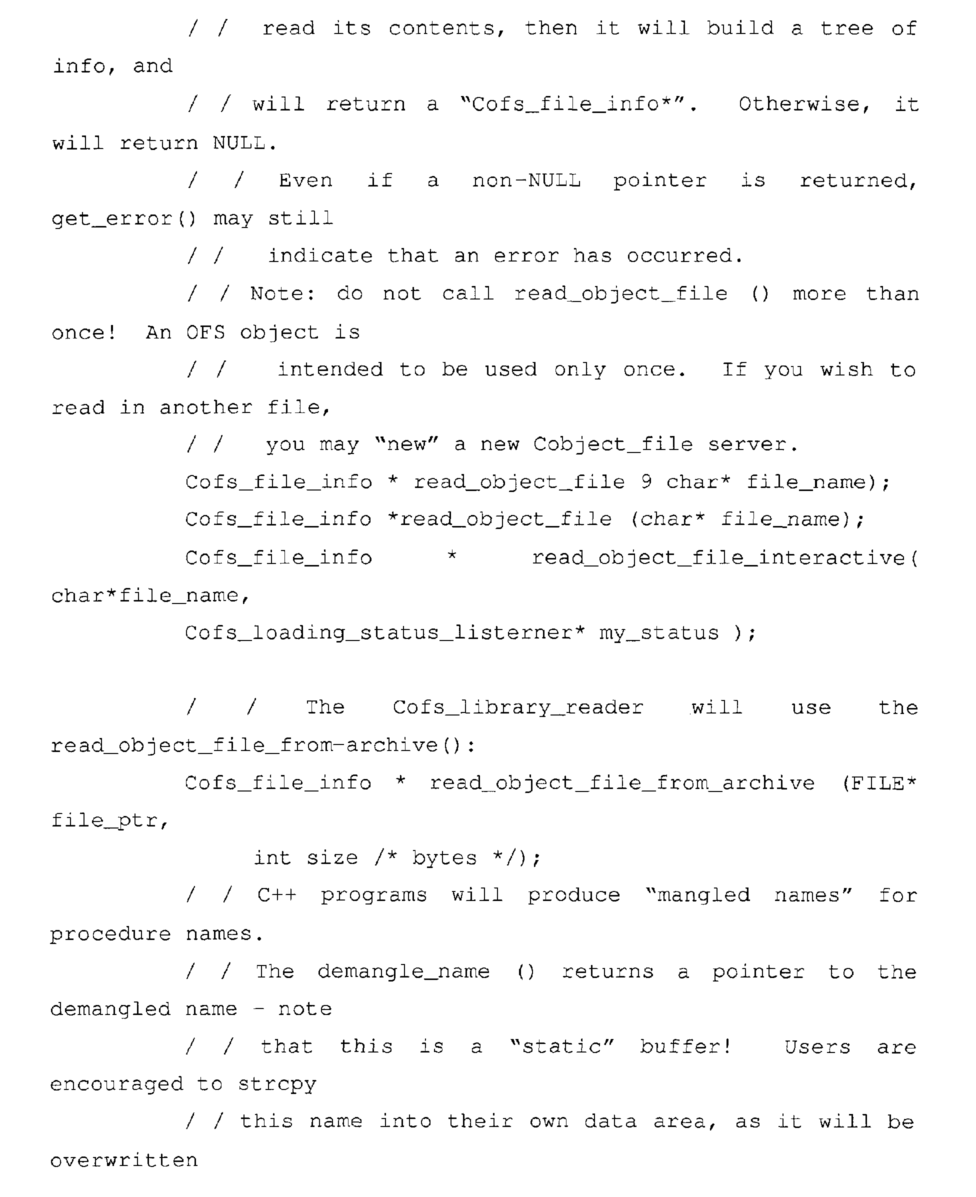

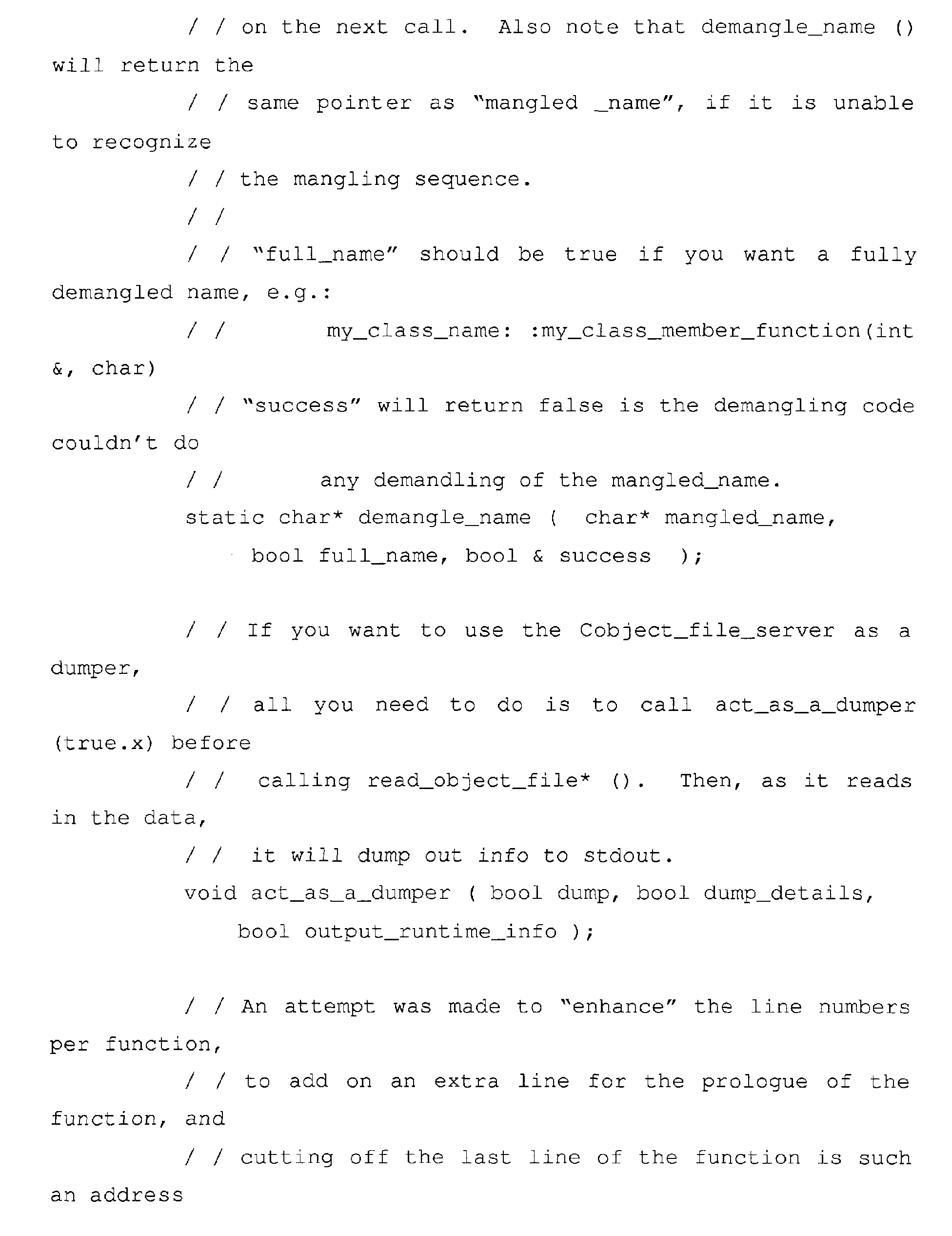

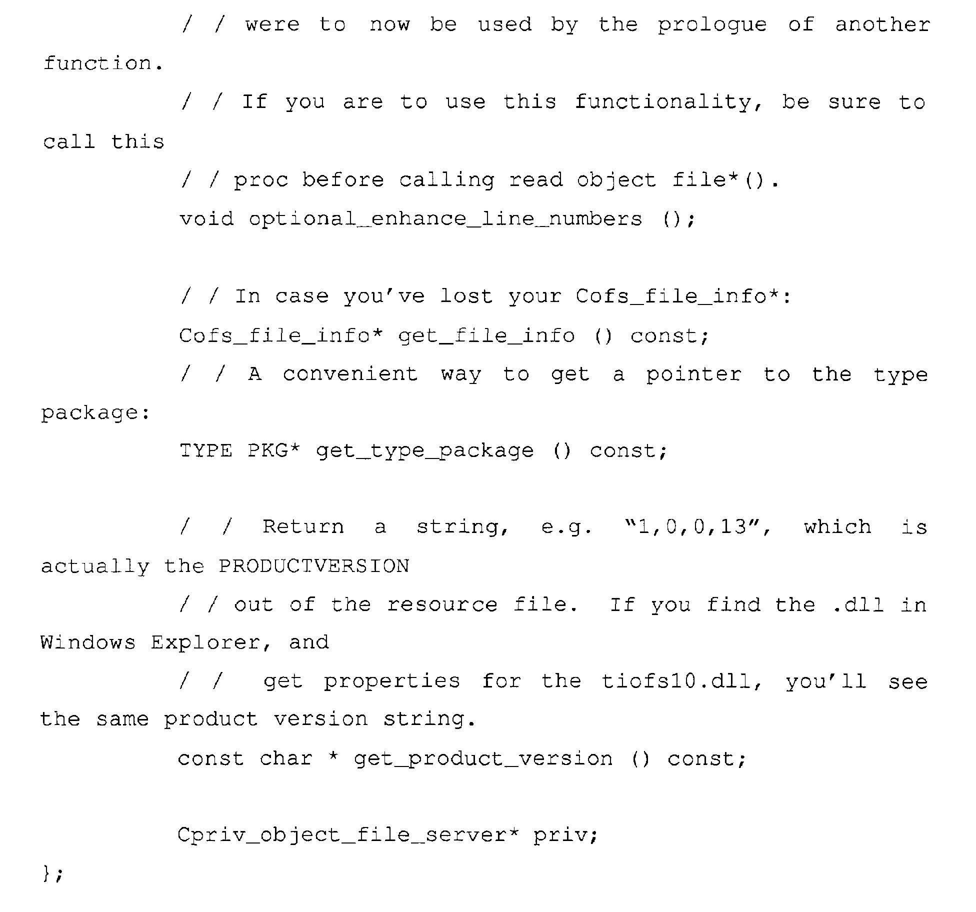

## Claims

1. An object file server for a client capable of interfacing files with multiple file formats, which server comprising:
a core and multiple file readers coupled between said core and said files, said file readers being applied to said files for reading the files and determining the file type and once determining the file type presenting to the core the information whereupon the files are presented in a single usable format to the client.

2. The object file server of Claim 1, wherein said core includes storage for storing the files read from the readers and a client interface for presenting the files in a single format to the client.

3. A debugger adapter operable for different file formats comprising:
an object file server capable of interfacing files with multiple file formats and comprising:
a core and multiple file readers coupled between said core and said files, said file readers being sequentially applied to said files for reading the files and determining the file type and once determining the file type presenting to the core the information whereupon the files are presented in a single usable format to a debugger.

4. A universal debugger operable for different file formats comprising:
a debugger;
an object file server capable of interfacing files with multiple file formats and comprising:
a core and multiple file readers coupled between said core and said files, said file readers being applied to said object file server for reading the files and determining the file type and once determining the file type presenting to the core the information whereupon the files are stored in the core and wherein said object file server includes a client interface for reading the files from the core to the debugger in a single usable format.

5. A visual linker for different file formats comprising:
a visual linker, an input object file server capable of interfacing files with multiple file formats comprising: a core and multiple file readers coupled between said core and said files, said file readers being coupled to said files for reading said files and determining for each of the files the file type and once determining the file type presenting to the core and storing in the core of the file server the information in the files, said object file server including a visual linker input interface whereupon the files are presented in a single usable format to said visual linker.

6. The visual linker of Claim 5 further comprising:
an output object file server including an output core and multiple file writers wherein the files in a single file format from the visual linker are converted from the core of the output object file server to selected output file format by object file writers for each desired output file format.

7. A method of interfacing files with multiple formats to a client comprising:
applying multiple file readers each capable of reading different file formats until a reader is found that reads the file;
storing said file in storage when read from said reader; and reading said file from said storage in a single format.

8. A method of debugging files in multiple formats comprising:
applying multiple readers capable of reading different file formats to said files until a reader is found that reads the file;
storing said files when read from said readers in storage; and
reading in said files from said storage in a single format to a debugger.

9. A method of visual linking files of different formats comprising:
applying multiple readers capable of reading different file formats to said files until a reader is found that reads a file;
storing said files read from said readers in an input storage; and
reading said files in a single format to a visual linker.

10. The method of Claim 9 further comprising:
coupling the output files in a single format to an output storage; and
coupling multiple file writers to said output storage for converting the files in a single format to selected file formats by selected file writers.

11. A universal object file writer comprising:
an output core for storing files in a single format; and
multiple file writers coupled to said core for converting the files in the single format to selected file formats by selected file writers.
